# EUROPEAN PATENT SPECIFICATION

(11) **EP 2 960 144 B1**
(45) Date of publication and mention of the grant of the patent: **15.03.2017**
(21) Application number: 15161520.0
(22) Date of filing: 27.03.2015
(51) Int. Cl.: B62J 25/00

(54) **VEHICLE, FOOTREST SYSTEM FOR VEHICLE AND METHOD OF INSTALLING FOOTREST SYSTEM IN VEHICLE**
FAHRZEUG, FUSSTÜTZENSYSTEM FÜR FAHRZEUG UND VERFAHREN ZUR INSTALLATION EINES FUSSSTÜTZENSYSTEMS IN EINEM FAHRZEUG
VÉHICULE, SYSTÈME DE REPOSE-PIEDS POUR VÉHICULE ET PROCÉDÉ D'INSTALLATION D'UN TEL SYSTÈME DANS UN VÉHICULE

(30) Priority: 26.06.2014 JP 2014131607
(43) Date of publication of application: 30.12.2015
(73) Proprietor: Yamaha Hatsudoki Kabushiki Kaisha, Iwata-shi, Shizuoka 438-8501 (JP)
(72) Inventor: Fujiwara, Yuu, Shizuoka-ken, 438-8501 (JP)
(74) Representative: Moreland, David

(56) References cited:
- WO-A2-2007/140374
- JP-A- 2008 062 720
- US-A1- 2008 179 859

## Description

### FIELD OF INVENTION

The present invention relates to a vehicle such as a saddle-type vehicle or saddle-ride vehicle, comprising a footrest that moves between a use position and a retracted position.

### BACKGROUND OF INVENTION

Examples of a vehicle including a footrest that moves between a use position and a retracted position include a vehicle disclosed in Japanese Patent Application Laid-Open No. 2013-147086 (hereinafter, referred to as "PTL 1"). This vehicle is a motorcycle and includes footrests for a passenger. The footrests are each supported by a vehicle body frame so as to be turnable around a support pin and move between the use position and retracted position.

The footrest disclosed in PTL 1 has a feature that the footrest has a broad footrest surface. This footrest turns upward around an axis parallel to the footrest surface of the footrest and moves to the retracted position, which is close to a vertical orientation. This configuration prevents an increase in vehicle width when the footrest is placed at the retracted position even if the footrest surface is made broader.

For some vehicles, however, there is not sufficient space in an upward direction of the footrests. Thus, it may be difficult to turn the footrests upward in the case of these vehicles. Meanwhile, disposing the footrests more outward in the left and right direction of the vehicle body makes it possible to secure a space above the footrests and thus to turn the footrests upward. However, disposing the footrests more outward may be unfavorable because of a possible increase in the size of the vehicle body in the vehicle width direction.

When there is no sufficient space in the upward direction of the footrests, a configuration may be considered in which the footrests are each turned forward or rearward around an axis perpendicular to the footrest surface instead of turning the footrest upward. However, turning the footrest surface having a broad area rearward leaves the footrest surface at the orientation close to a horizontal orientation even after the footrest is moved to the retracted position. In order to sufficiently reduce the portions of the footrests that protrude in the vehicle width direction when the footrests are at the retracted positions, the footrest surfaces need to be retracted at a deep inner side position of the vehicle body. In this case, however, interference between a component disposed at the inner side position of the vehicle body and the footrest becomes a problem.

An object of at least one embodiment of the present invention is to provide a vehicle including a footrest that is compactly-retractable without being turned in a vertically upward direction of a footrest surface of the footrest even when the area of the footrest surface is large.

Japanese Patent Application JP 2008-062720-A (YAMAHA MOTOR COMPANY) describes a whole body of a foot rest provided on a side surface of a main frame together with a foot rest main body with a mounting bracket fixed on the main frame. Under a normal condition, the foot rest main body extends in a direction roughly perpendicular to the main frame and is folded in the main frame side when the same touch a ground. A whole body of a projection part of the mounting bracket fits in a hole part of the foot rest main body under a normal condition, and only a tip part of the projection part maintains fitting in the hole part even under the maximum leaping up condition of the foot rest main body. Consequently, mud and stone is prevented from being bit between abutment surfaces of the mounting bracket and the foot rest main body.

### SUMMARY OF INVENTION

Various aspects of the present invention are defined in the independent claims. Some preferred features are defined in the dependent claims.

A vehicle according to a first aspect of the present invention includes a plurality of footrests, wherein at least one footrest of the plurality of footrests is configured to turn around a rotation axis and thereby move between a use position and a retracted position. The footrest may be a footrest in which a maximum dimension of the footrest in a front and rear direction of a vehicle body and/or a maximum dimension of the footrest in a left and right direction of the vehicle body may be greater than a maximum dimension of the footrest in a direction perpendicular to a footrest surface of the footrest when the footrest is in the use position. The plurality of the footrests includes a left footrest and a right footrest, the left footrest being disposed in a leftward direction from a center of the vehicle body; and the right footrest being disposed in a rightward direction from the center of the vehicle body, wherein the rotation axis of the left footrest is inclined so that a region of the rotation axis that is positioned more upward is positioned more rightward when viewed in the front and rear direction of the vehicle body, and the rotation axis of the right footrest is inclined so that a region of the rotation axis that is positioned more upward is positioned more leftward when viewed in the front and rear direction of the vehicle body. The rotation axis intersects, e.g.obliquely intersects, with a flat surface
parallel to the footrest surface, at or when in the use position. The rotation axis may be inclined or oblique with respect to a line perpendicular to the footrest surface when in the use position. The footrest surface when in the use position is closer to a
horizontal orientation than a vertical orientation, e.g. when the vehicle stands upright. The footrest surface at or when in the retracted position is closer to the vertical
orientation than the horizontal orientation, e.g. when the vehicle stands upright.

According to the vehicle of the first aspect of the present invention, the maximum dimension of the footrest in the front and rear direction of the vehicle body and the maximum dimension of the footrest in the left and right direction of the vehicle body may be greater than the maximum dimension of the footrest in the direction perpendicular to the footrest surface at or when in the use position. Moreover, the rotation axis of the footrest may be set so as to intersect with a flat surface parallel to the footrest surface at or when in the use position and may be inclined with respect to the line perpendicular to the footrest surface at or when in the use position, and may be so as to make the footrest surface at or when in the use position close to a horizontal orientation and to make the footrest surface at the retracted position close to a vertical orientation. Setting the rotation axis in this manner may make it easy to avoid interference between a vehicle constituting element and the footrest even when such a vehicle constituting element is located vertically-upwardly of the footrest surface of the footrest, as compared with a case where the footrest is turned around a rotation axis parallel to the footrest surface. Moreover, the footrest may be retracted to a position where the footrest surface is close to the vertical orientation, so that interference between a component disposed at an inner side of the vehicle body and the footrest may be suppressed as compared with the case where the footrest is turned around a rotation axis perpendicular to the footrest surface. In addition, as compared with the case where the footrest is turned in a vertically upward direction of the footrest surface around a rotation axis parallel to the footrest surface, movement in which the footrest shifts in the front and rear direction horizontal to the footrest surface may be added during the movement from the use position to the retracted position in the present invention. For this reason, the operation range for the footrest to move from the use position to the retracted position may increase. In general, an increase in the operation range may make it hard to avoid interference between a vehicle component and the footrest. However, there may not be many vehicle components around the footrest when in the use position because of layout characteristics. For this reason, in the present invention, even when the operation range increases, the footrest may be compactly retracted while avoiding interference with a vehicle component. Thus, according to the present invention, even when the area of the footrest surface is large, the footrest may be compactly retracted without being turned in a vertically upward direction of the footrest surface.

The rotation axis may be inclined so that a region of the rotation axis that is positioned more upward is positioned more forward when viewed in the left and right direction of the vehicle body.

According to this configuration, turning the footrest in a rear upward oblique direction of the vehicle body, for example, from the use position where the footrest surface is close to the horizontal orientation may move the footrest to the retracted position where the footrest surface is close to the vertical orientation. Accordingly, as compared with the case where the footrest is turned around a rotation axis parallel to the footrest surface, it may be easy to avoid interference between a vehicle constituting element and the footrest even when such a vehicle constituting element is located vertically-upwardly of the footrest surface of the footrest. In addition, as compared with the case where the footrest is turned in a vertically upward direction of the footrest surface around a rotation axis parallel to the footrest surface, the operation range for the footrest to move from the use position to the retracted position increases in the case of the present invention. Although the operation range may increase, the footrest may be compactly retracted while avoiding interference with a vehicle component in the case of the present invention because of layout characteristics in which there may not be many vehicle components around the footrest when in the use position. Thus, according to the present invention, even when the area of the footrest surface is large, the footrest may be compactly retracted without being turned in a vertically upward direction of the footrest surface.

The rotation axis may be inclined so that a region of the rotation axis that is positioned more upward may be positioned more rearward when viewed in the left and right direction of the vehicle body.

According to this configuration, turning the footrest in a front upward oblique direction of the vehicle body, for example, from the use position where the footrest surface is close to the horizontal orientation may move the footrest to the retracted position where the footrest surface is close to the vertical orientation. Accordingly, as compared with the case where the footrest is turned around a rotation axis parallel to the footrest surface, it may be easy to avoid interference between a vehicle constituting element and the footrest even when such a vehicle constituting element is located vertically-upwardly of the footrest surface of the footrest. In addition, as compared with the case where the footrest is turned in a vertically upward direction of the footrest surface around a rotation axis parallel to the footrest surface, the operation range for the footrest to move from the use position to the retracted position may increase in the case of the present invention. Although the operation range increases, the footrest may be compactly retracted while avoiding interference with a vehicle component in the case of the present invention because of layout characteristics in which there may not be many vehicle components around the footrest at or when in the use position. Thus, according to the present invention, even when the area of the footrest surface is large, the footrest may be compactly retracted without being turned in a vertically upward direction of the footrest surface.

According to this configuration, the angles of the footrest surfaces of the left footrest and/or the right footrest at or when in the retracted positions may be more flexibly set. Thus, as compared with the configuration in which the footrests are each turned around a rotation axis perpendicular to the footrest surface, the footrest may be retracted at a position close to the vertical orientation matched to the outline of the vehicle body. Thus, interference between a component disposed at an inner side of the vehicle body and the footrest may be suppressed, and the footrest may be compactly retracted.

The rotation axis may have a slope that is closer to a line obtained by causing a line perpendicular to the footrest surface at or when in the use position to incline forty five degrees in a rotation direction identical to that of the rotation axis than to the line perpendicular to the footrest surface at or when in the use position and/or that is closer to the line caused to incline forty five degrees than to a line parallel to the footrest surface at or when in the use position when viewed in the left and right direction of the vehicle body.

According to this configuration, a difference from the configuration in which the footrest is turned around an axis parallel to the footrest surface and a difference from the configuration in which the footrest is turned around an axis perpendicular to the footrest surface may be surely obtained. Thus, the operational effect of the first aspect may be more surely obtained, and even when the area of footrest surface is large, the footrest may be compactly retracted without being turned in a vertically upward direction of footrest surface.

The rotation axis may have a slope that is closer to a line obtained by causing a line perpendicular to the footrest surface at or when in the use position to incline thirty degrees in a rotation direction identical to that of the rotation axis than to a line perpendicular to the footrest surface at or when in the use position and/or that is closer to the line caused to incline thirty degrees than to a line parallel to the footrest surface at or when in the use position when viewed in the front and rear direction of the vehicle body.

According to this configuration, a difference from the configuration in which the footrest is turned around an axis perpendicular to the footrest surface may be surely obtained. Thus, the operational effect of the fourth aspect may be more surely obtained, and even when the area of footrest surface is large, the footrest may be compactly retracted without being turned in a vertically upward direction of footrest surface.

The vehicle may further include a vehicle body frame. The vehicle may provide a power unit swingably supported by the vehicle body frame. The footrest at or when in the use position may be disposed at a position where the footrest overlaps the power unit in a side view of the vehicle body.

In general, a power unit swingably supported by a vehicle body frame may be large in the width direction of the vehicle body and swings, so that the footrest may interfere with the power unit. However, the present invention may make it possible to compactly retract the footrest without causing the footrest to interfere with the power unit even when the footrest cannot be turned in a vertically upward direction of the footrest surface of the footrest.

In the retracted position, the footrest and/or a long axis of the footrest may extend upwardly forwardly of, or upwardly and rearwardly from, the rotational axis, when viewed from the side of the vehicle and when the vehicle is upright and unloaded.

The vehicle may be or comprise a straddle-type or saddle-ride vehicle or motor vehicle such as a scooter, moped, motorcycle, motorbike, motor tricycle, all-terrain vehicle (ATV) or snowmobile or the like.

### BRIEF DESCRIPTION OF DRAWINGS

An embodiment of the present invention will now be described by way of example only, with reference to the accompanying drawings, which are:
- **Figure 1**: a side view illustrating a state of a vehicle according to an embodiment of the present invention where a footrest is moved to a use position while the vehicle stands upright;
- **Figure 2**: a side view illustrating a state of the vehicle as shown in Figure 1 where the footrest is moved to a retracted position while the vehicle stands upright;
- **Figure 3**: a rear view illustrating a state of the vehicle as shown in Figure 1 where the footrests are moved to the use positions while the vehicle stands upright;
- **Figure 4**: a rear view illustrating a state of the vehicle as shown in Figures 1 to 3 where the footrests are moved to the retracted positions while the vehicle stands upright;
- **Figure 5**: a plan view illustrating a state of the vehicle as shown in Figures 1 to 4 where the footrests are moved to the use positions;
- **Figure 6**: a plan view illustrating a state of the vehicle as shown in Figures 1 to 5 where the footrests are moved to the retracted positions;
- **Figure 7**: a three-view diagram illustrating a shape of a left footrest and includes Figures 7A, 7B, and 7C illustrating a rear view, side view, and top view, respectively;
- **Figure 8**: a three-view diagram illustrating the left footrest when in the use position and includes Figures 8A, 8B, and 8C illustrating a rear view, side view, and top view, respectively;
- **Figure 9**: a three-view diagram illustrating the left footrest when in the retracted position and includes Figures 9A, 9B, and 9C illustrating a rear view, side view, and top view, respectively;
- **Figure 10**: a diagram for describing an operation of the left footrest and includes Figures 10A, 10B, and 10C illustrating side views for the use position, an intermediate position, and the retracted position, respectively;
- **Figure 11**: a diagram for describing an operation of the left footrest and includes Figures 11 A, 11B, and 11C illustrating rear views for the use position, the intermediate position, and the retracted position, respectively;
- **Figure 12**: a diagram for describing an operation of the left footrest and includes Figures 12A, 12B, and 12C illustrating top views for the use position, the intermediate position, and the retracted position, respectively;
- **Figure 13**: a three-view diagram illustrating a left footrest when in a use position in a vehicle according to another embodiment and includes Figures 13A, 13B, and 13C illustrating a rear view, side view, and top view, respectively;
- **Figure 14**: a three-view diagram illustrating the left footrest shown in Figure 13 when in a retracted position and includes Figures 14A, 14B, and 14C illustrating a rear view, side view, and top view, respectively;
- **Figure 15**: a diagram for describing an operation of the left footrest as shown in Figures 13 and 14 and includes Figures 15A, 15B, and 15C illustrating side views for the use position, an intermediate position, and the retracted position, respectively;
- **Figure 16**: a diagram for describing an operation of the left footrest as shown in Figures 13 to 15 and includes Figures 16A, 16B, and 16C illustrating rear views for the use position, the intermediate position, and the retracted position, respectively;
- **Figure 17**: a diagram for describing an operation of the left footrest as shown in Figures 13 to 16 and includes Figures 17A, 17B, and 17C illustrating top views for the use position, the intermediate position, and the retracted position, respectively;
- **Figure 18**: a three-view diagram for describing definition of a footrest surface of the footrest in a variation and includes Figures 18A, 18B, and 18C illustrating a rear view, side view, and top view, respectively; and
- **Figure 19**: a three-view diagram for describing another definition of the footrest surface of the footrest in a variation and includes Figures 19A, 19B, and 19C illustrating a rear view, side view, and top view, respectively.

### DETAILED DESCRIPTION OF DRAWINGS

It will be appreciated that the present invention is applicable to vehicles in general and particularly to a straddle-type or saddle-ride vehicle or a motor vehicle. The motorcycle described herein is given as only one example of such a straddle-type vehicle, saddle-ride vehicle or motor vehicle. A straddle-type vehicle, saddle-ride vehicle or motor vehicle as used herein is intended to include the following terms also used in the art:
saddle-ride type vehicle or motor vehicle, saddle-straddling type vehicle or motor vehicle, and includes: motorcycles and motorbikes as well as motor tricycles and All Terrain Vehicles (ATV's), scooters, mopeds and snowmobiles.

Hereinafter, each embodiment of the present invention will be described in detail with reference to the accompanying drawings. In the following description, the terms "front," "rear," "left," "right," "up," and "down" are used to indicate the front, rear, left, right, up, and down directions, respectively, as viewed from a rider on the vehicle while the vehicle stands upright. The term "while the vehicle stands upright" means a state of the vehicle where the vehicle stands upright on a horizontal surface without deflection caused by the load of a rider or fuel on the vehicle (i.e., no passenger, and no fuel) and without putting a stand down. The reference signs "F," "Re," "L," "R," "U," and "D" on the drawings denote the front, rear, left, right, up, and down directions, respectively.

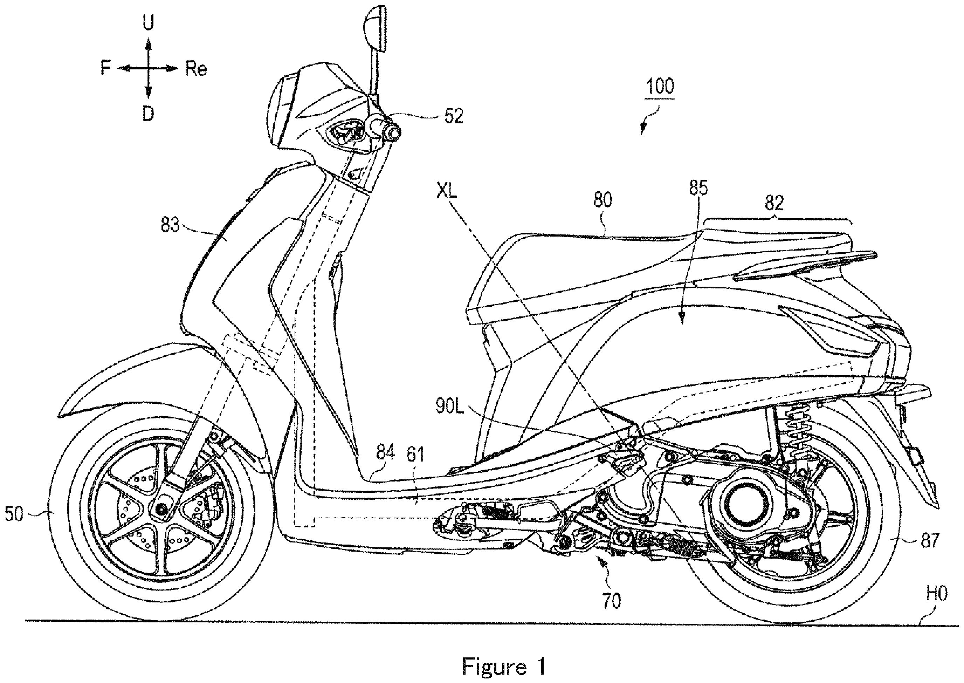

Figure 1 is a side view illustrating a state of a vehicle according to a first embodiment of the present invention where a footrest is moved to a use position.

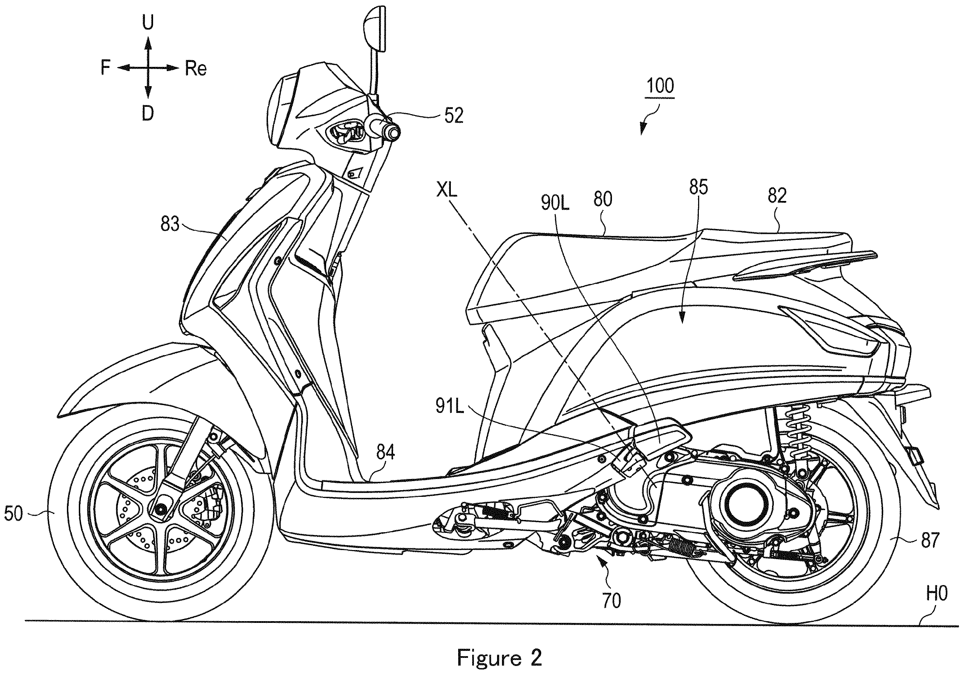

Figure 2 is a side view illustrating a state of the vehicle according to the first embodiment where the footrest is moved to a retracted position. Figures 1 and 2 each illustrate the state of the vehicle 100 where the vehicle 100 stands upright on horizontal surface H0.

The vehicle 100 according to embodiment 1 is a scooter-type motorcycle and includes a front wheel 50, a steering handle 52, a vehicle body frame 61, a power unit 70, a main seat 80, a tandem seat 82, a front cover 83, a foot-rest plate 84, a rear cover 85, a rear wheel 87, and footrests 90L and 90R.

The power unit 70 includes an engine, a transmission and an air cleaner. The power unit 70 is swingably supported with respect to a vehicle body frame 61.

The main seat 80 is a seat for a rider to sit down. The tandem seat 82 is a seat for a passenger to sit down. The main seat 80 is disposed above the power unit 70, and the tandem seat 82 is disposed in a rearward direction of the main seat 80. The rear cover 85 that covers some part of the power unit 70 is provided under a front portion of the main seat 80 as well as under left and right portions of the main seat 80 and the tandem seat 82.

The foot-rest plate 84 is provided forward of the main seat 80 and at a position lower than the main seat 80. The rider puts his or her feet on the foot-rest plate 84 when the rider drives the vehicle 100.

The footrests 90L and 90R are components on which a passenger can put his or her feet when the footrests 90L and 90R are in the use positions. The footrests 90L and 90R are provided at least one each on the left and right. The footrests 90L and 90R are each disposed at a position under a front portion of the tandem seat 82 or forward of the tandem seat 82 in the front and rear direction of the vehicle body when the footrests 90L and 90R are in the use positions. The footrests 90L and 90R are each disposed at a position lower than the tandem seat 82 in the up and down direction of the vehicle body when the footrests 90L and 90R are in the use positions. The footrests 90L and 90R are each disposed at a position where the footrests 90L and 90R when in the use positions overlap the power unit when viewed in a side view.

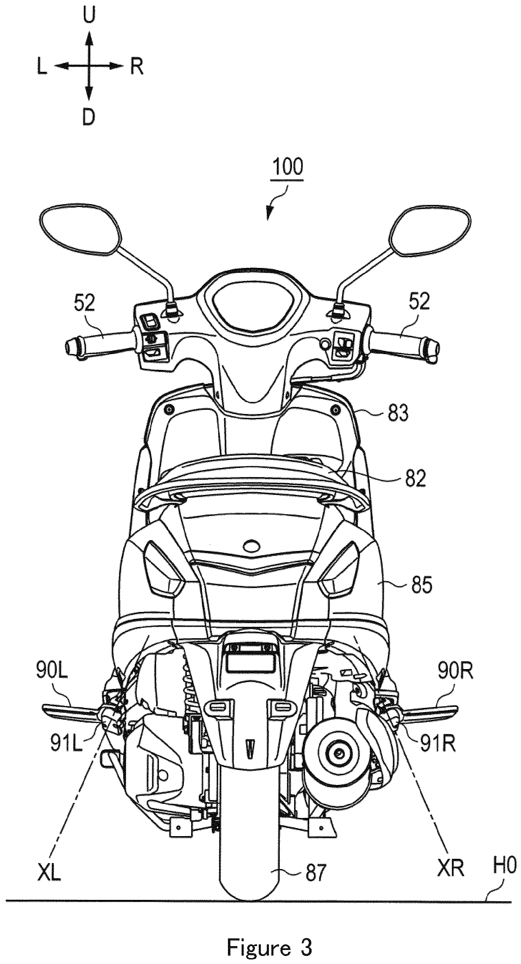

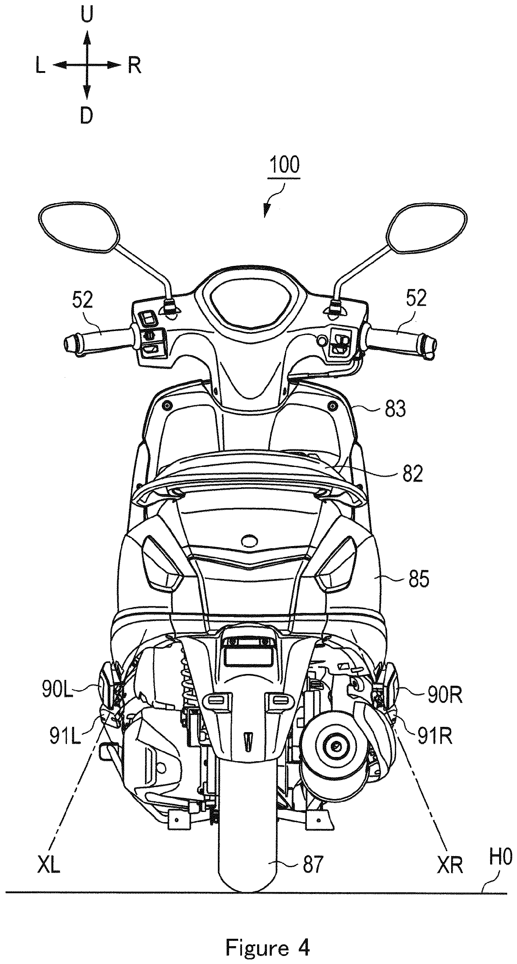

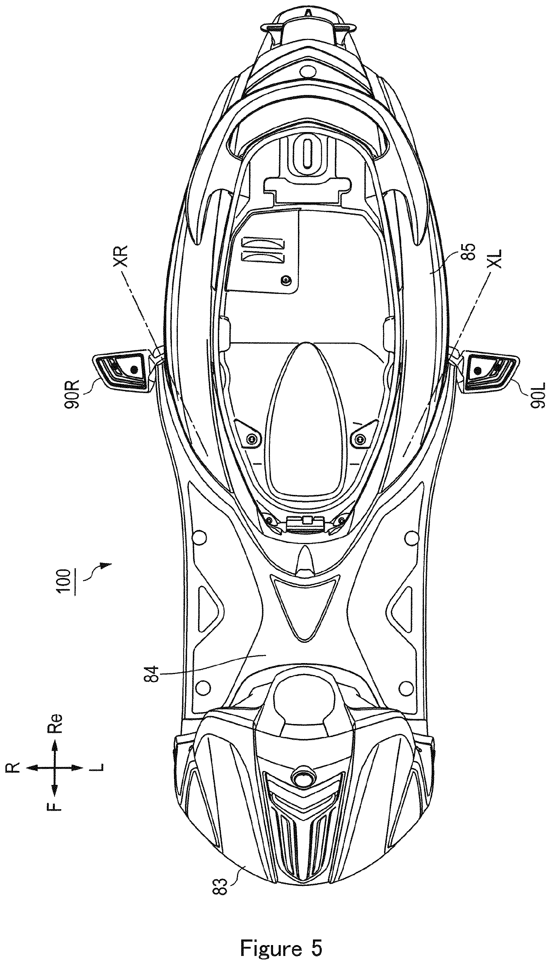

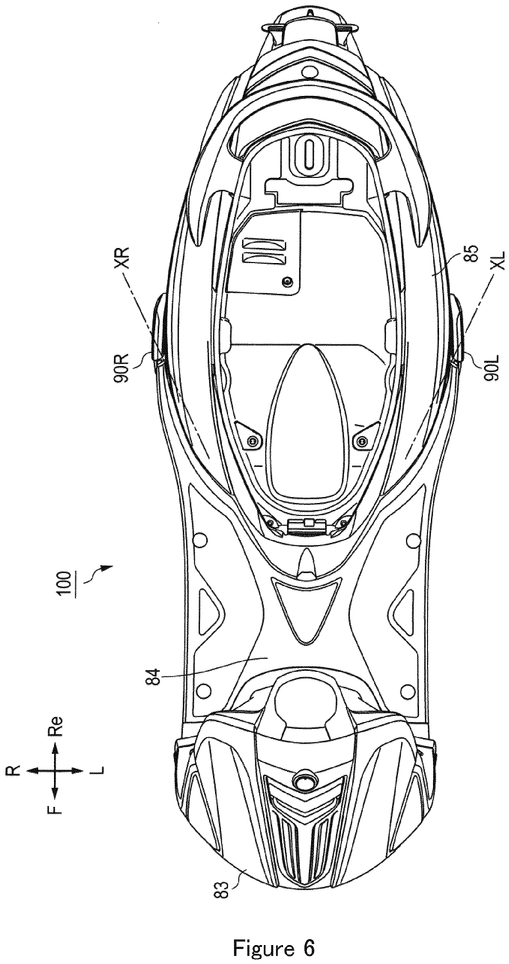

Figure 3 is a rear view illustrating a state of the vehicle according to the first embodiment where the footrests are moved to the use positions. Figure 4 is a rear view illustrating a state of the vehicle according to the first embodiment where the footrests are moved to the retracted positions. Figure 3 and 4 each illustrate the state of vehicle 100 where the vehicle 100 stands upright on the horizontal surface H0. Figure 5 is a plan view illustrating a state of the vehicle of the first embodiment where the footrests are moved to the use positions. Figure 6 is a plan view illustrating a state of the vehicle of the first embodiment where the footrests are moved to the retracted positions, Figures 5 and 6 illustrate the state of the vehicle 100 where the vehicle 100 stands upright on a horizontal surface parallel to the sheet surface of each drawing. Figures 5 and 6 illustrate a state of the vehicle in which the steering handle 52, the front wheel 50, the main seat 80, and the tandem seat 82 have been removed.

The left footrest 90L is disposed in an upper-leftward direction of the power unit 70. The right footrest 90R is disposed in an upper-rightward direction of the power unit 70. The footrests 90L and 90R are supported by the vehicle body frame 61 via the hinge members 91 L and 91 R. The hinge members 91 L and 91 R are disposed near the rear cover 85. The term "near" in this instance means that there is no gap large enough to dispose hinge member 91 L or 91 R having the same size between the rear cover 85 and the hinge member 91 L or 91 R in the same direction.

The footrests 90L and 90R are each movable between the use position and the retracted position. When the footrests 90L and 90R are in use positions (see Figures 1, 3, and 5), the orientation of each of the footrests 90L and 90R is closer to a horizontal orientation than a vertical orientation. More specifically, the axial direction perpendicular to a foot-rest surface S0 of each of the footrests 90L and 90R (to be described in more details, hereinafter) has a slope closer to a vertical line than to a horizontal surface. When the footrests 90L and 90R are at the retracted positions (see Figures 2, 4, and 6), the orientation of each of the footrests 90L and 90R is closer to a vertical orientation than a horizontal orientation. More specifically, the axial direction perpendicular to the foot-rest surface S0 of each of the footrests 90L and 90R (to be described in more details, hereinafter) has a slope closer to the horizontal surface than to the vertical line. The footrests 90L and 90R are retracted to the retracted positions when unnecessary.

The left footrest 90L is supported by the vehicle body frame 61 via the hinge member 91 L. The left footrest 90L is supported by the hinge member 91 L so as to be turnable around a rotation axis XL and is configured to turn around the rotation axis XL and thus to move between the use position and the retracted position. The right footrest 90R is supported by the vehicle body frame 61 via the hinge member 91 R. The right footrest 90R is supported by the hinge member 91 R so as to be turnable around a rotation axis XR and is configured to turn around the rotation axis XR and thus to move between the use position and the retracted position. The footrests 90L and 90R can be partially brought into contact with, or locked to, the hinge members 91 L and 91 R or part of the vehicle body, thereby to be fixed to the use positions. Moreover, the footrests 90L and 90R can be partially brought into contact with or locked to the hinge members 91 L and 91 R or part of the vehicle body, thereby to be fixed in the retracted positions.

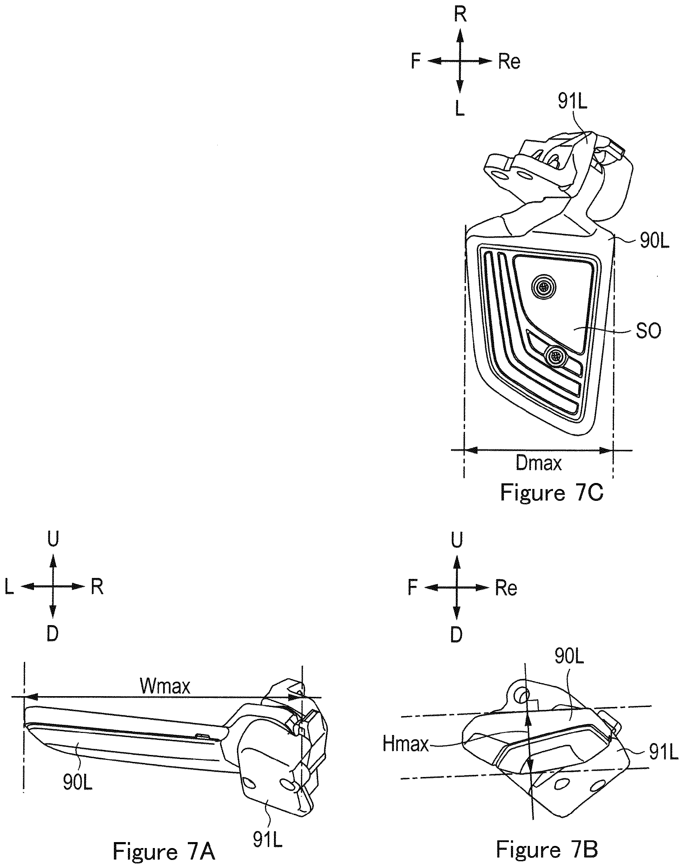

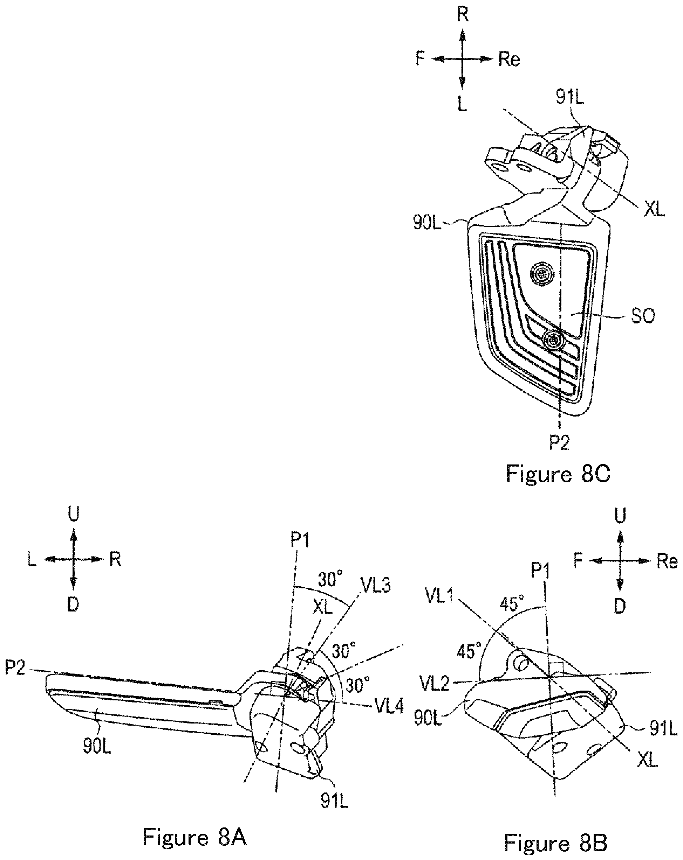

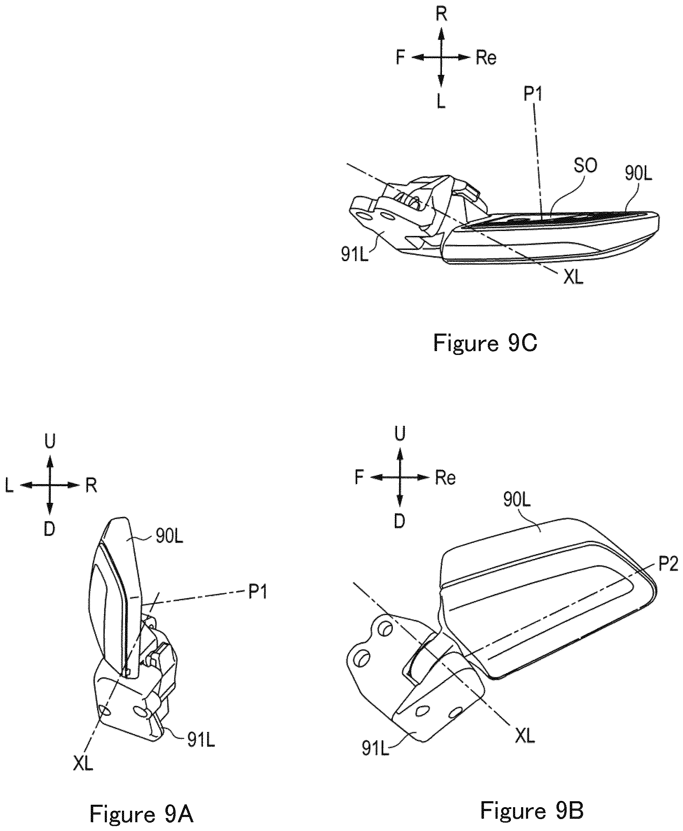

Figures 7 and 8 are each a three-view diagram of the left footrest placed in the use position and include: Figures 7A and 8A each illustrating a diagram viewed from the rearward direction of the vehicle body; Figures 7B and 8B each illustrating a diagram viewed from the leftward direction of the vehicle body; and Figures 7C and 8C each illustrating a diagram viewed from the upward direction of the vehicle body. Figure 9 is a three-view diagram of the left footrest placed at the retracted position and includes: Figure 9A illustrating a diagram viewed from the rearward direction of the vehicle body; Figure 9B illustrating a diagram viewed from the leftward direction of the vehicle body, and Figure 9C illustrating a diagram viewed from the upward direction of the vehicle body.

Subsequently, the left footrest 90L and the rotation axis XL will be described in more detail. The left footrest 90L and the right footrest 90R have a symmetric configuration. For this reason, a detailed description for the right footrest 90R will be omitted. Likewise, the rotation axis XR of the right footrest 90R and the rotation axis XL of the left footrest 90L are symmetric, so that a detailed description of the rotation axis XR of right footrest 90R will be omitted.

The footrest 90L has the footrest surface S0. The footrest surface S0 is a flat surface apart from grooves and holes, and a flat plate is stably fixed when placed on it. Hereinafter, the term "footrest surface S0" refers to the plate surface of this flat plate.

As illustrated in Figures 7A to 7C, when the footrest 90L is in the use position, a maximum dimension Dmax of the footrest 90L in the front and rear direction of the vehicle body and a maximum dimension Wmax of the footrest 90L in the left and right direction of the vehicle body are greater than a maximum dimension Hmax of the footrest 90L in the direction perpendicular to the footrest surface S0.

A line perpendicular to the footrest surface S0 of the footrest 90L is defined as "the perpendicular line P1" while a line in the plane of the footrest surface S0 extending in the left and right direction of the vehicle body, when the footrest 90L is in the use position is defined as "the transverse line P2." In this specification, the term "extending in the up and down direction of the vehicle body" means extending in the up and down direction of the vehicle body in a greater proportion than in the left and right direction or the front and rear direction of the vehicle body. Moreover, the term "extending in the left and right direction of the vehicle body" means extending in the left and right direction of the vehicle body in a greater proportion than in the front and rear direction or the up and down direction of the vehicle body. In addition, the term "extending in the front and rear direction of the vehicle body" means extending in the front and rear direction of the vehicle body in a greater proportion than in the up and down direction or the left and right direction of the vehicle body.

As illustrated in Figures 8A to 8C, when the footrest 90L is in the use position, the perpendicular line P1 of the footrest surface S0 extends in the up and down direction of the vehicle body. Moreover, the transverse line P2 extends in the left and right direction of the vehicle body.

The rotation axis XL of the footrest 90L is inclined with respect to both the perpendicular line P1 and the transverse line P2 of the footrest surface S0 when in the use position when viewed from the rearward direction of the vehicle body. Moreover, the rotation axis XL of the footrest 90L is inclined with respect to both the perpendicular line P1 and the transverse line P2 of the footrest surface S0 when in the use position when viewed from the leftward direction of the vehicle body. The term "is inclined" is used to indicate that it is not parallel or perpendicular, e.g. obliquely oriented to.

More specifically, the left rotation axis XL is inclined so that a region of the axis that is positioned more forward is positioned more rightward when viewed from the upward direction of the vehicle body. In addition, the left rotation axis XL is inclined so that a region of the axis that is positioned more forward is positioned more upward when viewed from the leftward side direction of the vehicle body. Moreover, the left rotation axis XL is inclined so that a region of the axis XL that is positioned more upward is positioned more rightward when viewed from the rearward direction of the vehicle body.

More specifically, as illustrated in Figure 8B, the rotation axis XL has a slope closer to a virtual line VL1 than to the perpendicular line P1 of the footrest surface S0 when viewed in the left and right direction of the vehicle body. The virtual line VL1 is a line obtained by causing the perpendicular line P1 to incline 45 degrees in the same rotation direction as that of the rotation axis XL when viewed in the left and right direction of the vehicle body. Moreover, the rotation axis XL has a slope closer to the virtual line VL1 than to a virtual line VL2 when viewed in the left and right direction of the vehicle body. The virtual line VL2 is a line that is parallel to the footrest surface S0 when in the use position and that extends in the front and rear direction of the vehicle body.

As shown in Figure 8A, the rotation axis XL has a slope closer to a virtual line VL3 than to the perpendicular line P1 when viewed in the front and rear direction of the vehicle body. The virtual line VL3 is a line obtained by causing the perpendicular line P1 to incline 30 degrees in the same rotation direction as that of the rotation axis XL when viewed in the front and rear direction of the vehicle body. Moreover, the rotation axis XL has a slope closer to the virtual line VL3 than to a virtual line VL4 when viewed in the front and rear direction of the vehicle body. The virtual line VL4 is a line that is parallel to the footrest surface S0 when in the use position and that extends in the left and right direction of the vehicle body.

Turning the footrest 90L around the rotation axis XL configured in this manner may move the footrest 90L to the retracted position as illustrated in Figures 9A, 9B, and 9C. In the retracted position, the perpendicular line P1 of the footrest surface S0 extends in the left and right direction of the vehicle body as illustrated in Figures 9A and 9C. The left footrest 90L is retracted in such a way that the footrest surface S0 is directed to the right side of the vehicle body. In addition, the transverse line P2 extends in the front and rear direction of the vehicle body as illustrated in Figure 9B.

Moreover, the back surface of the left footrest 90L (surface opposite to the footrest surface S0) is placed so as to extend from a part of the outline of the rear cover 85.

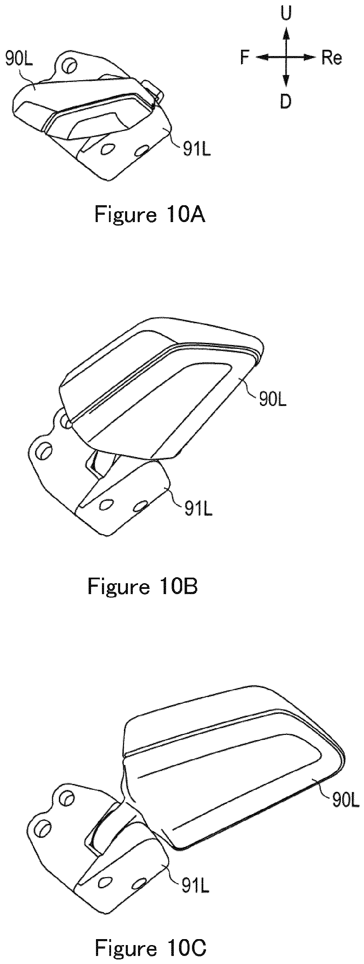

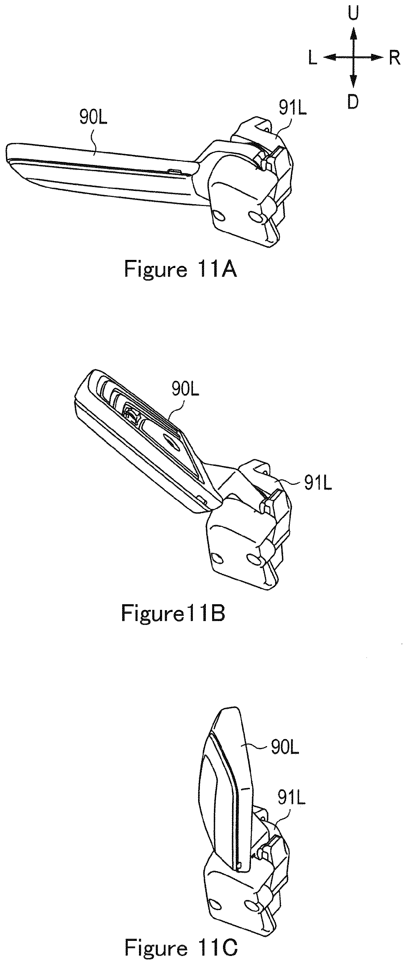

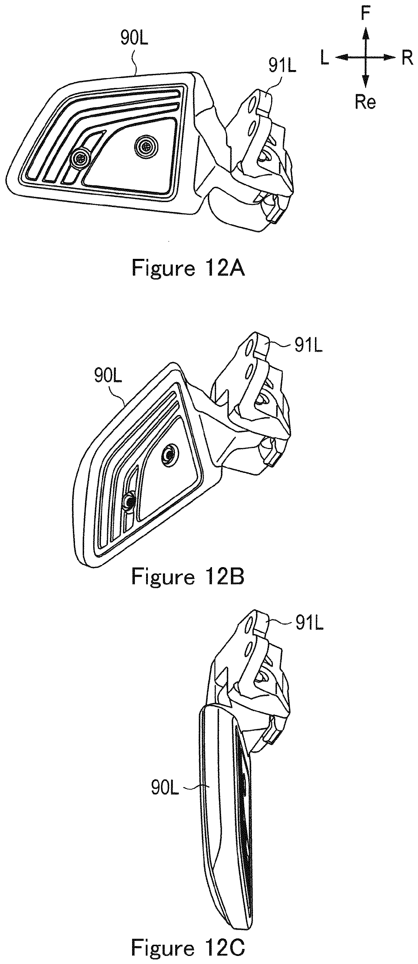

Figure 10 is a diagram for describing an operation of the left footrest and includes Figures 10A, 10B, and 10C illustrating side views for the use position, an intermediate position, and the retracted position, respectively. Figure 11 is a diagram for describing an operation of the left footrest and includes Figure 11 A, 11 B, and 11C illustrating rear views for the use position, the intermediate position, and the retracted position, respectively. Figure 12 is a diagram for describing an operation of the left footrest and includes Figures 12A, 12B, and 12C illustrating top views for the use position, the intermediate position, and the retracted position, respectively. The term "intermediate position" refers to a middle position between the use position and retracted position where the footrest 90L is moved.

As illustrated in Figures 10 to 12, the left footrest 90L moves from the use position to the retracted position through the intermediate position. Since the rotation axis XL is neither parallel to, nor perpendicular to, the footrest surface S0, the footrest surface S0 of left footrest 90L moves between the use position and the retracted position while a slope angle of the footrest surface S0 of the left footrest 90L changes during the movement.

As described above, according to the vehicle 100 of the first embodiment, in the footrests 90L and 90R, the maximum dimension Dmax in the front and rear direction of the vehicle body and the maximum dimension Wmax in the left and right direction of the vehicle body are greater than the maximum dimension Hmax in the direction perpendicular to the footrest surface S0 when in the use position. Moreover, the rotation axes XL and XR of the footrests 90L and 90R are each set so as to intersect with a flat surface parallel to the footrest surface S0 when in the use position and to be inclined with respect to the line perpendicular to the footrest surface S0 when in the use position, and so as to make the footrest surface S0 when in the use position close to the horizontal orientation and to make the footrest surface S0 at the retracted position close to the vertical orientation. Setting the rotation axes XL and XR in this manner makes it easy to avoid interference between a vehicle constituting element and the footrests 90L and 90R even when such a vehicle constituting element exists in a vertically-upward direction of the footrest surface S0 of the footrests 90L and 90R, as compared with a case where the footrests 90L and 90R are each turned around a rotation axis parallel to the footrest surface S0. Moreover, the footrests 90L and 90R are each retracted at a position where the footrest surface S0 is close to the vertical orientation in this embodiment, so that interference between a component disposed at an inner side of the vehicle body and the footrests 90L and 90R may be suppressed as compared with the case where the footrests 90L and 90R are each turned around a rotation axis perpendicular to the footrest surface S0. In addition, as compared with the case where the footrests 90L and 90R are each turned in a vertically upward direction of the footrest surface S0 around a rotation axis parallel to the footrest surface S0, movement in which the footrests 90L and 90R shift in the front and rear direction horizontal to the footrest surface S0 is added during the movement from the use position to the retracted position in this embodiment. For this reason, the operation ranges for the footrests 90L and 90R to move from the use positions to the retracted positions increase. In general, an increase in the operation range makes it hard to avoid interference between a vehicle component and the footrests 90L and 90R. However, there are not many vehicle components around the footrests 90L and 90R when in the use positions because of layout characteristics. For this reason, in this embodiment, even when the operation ranges increase, the footrests 90L and 90R may be compactly retracted while avoiding interference with vehicle components. Thus, according to the present invention, even when the area of the footrest surface S0 is large, the footrests 90L and 90R may be compactly retracted without being turned in a vertically upward direction of the footrest surface S0.

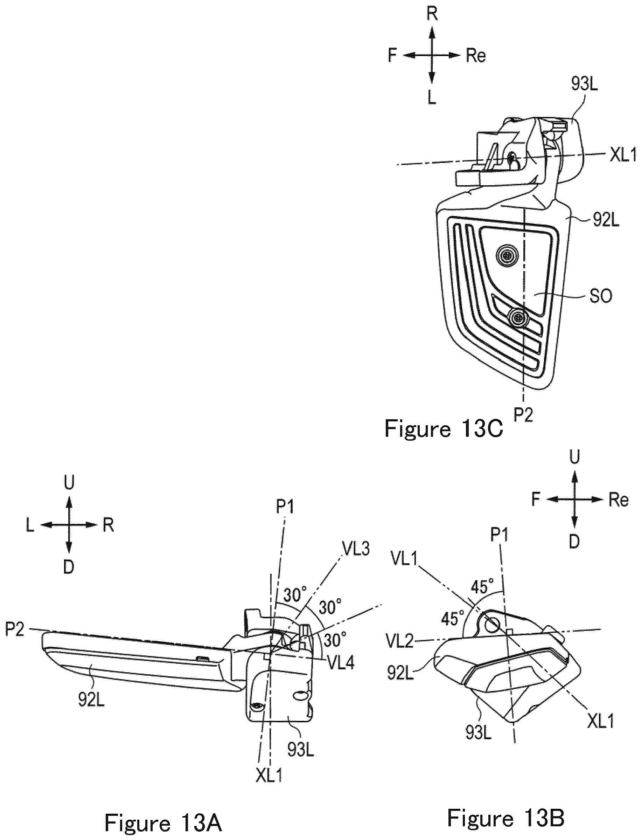

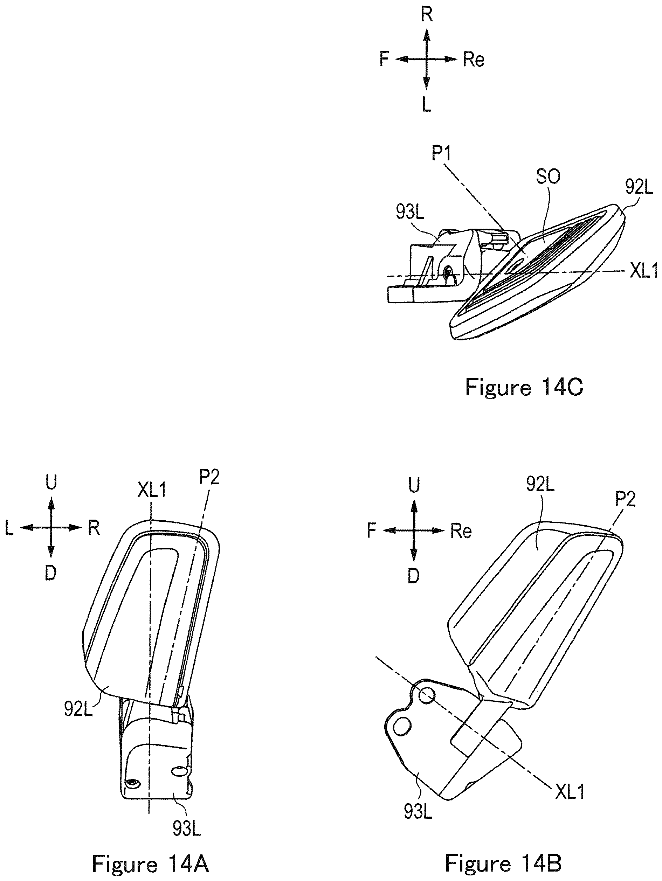

Figure 13 is a three-view diagram illustrating a footrest when in a use position of a vehicle according to the second embodiment and includes Figure 13A, 13B, and 13C illustrating a rear view, side view, and top view, respectively. Figure 14 is a three-view diagram illustrating the footrest when in a retracted position of the vehicle according to the second embodiment and includes Figures 14A, 14B, and 14C illustrating a rear view, side view, and top view, respectively.

The vehicle according to the second embodiment has a configuration in which the amount of slope of a rotation axis XL1 of a footrest 92L in the left and right direction of the vehicle body is reduced as compared with the configuration according to the first embodiment. The shape of the footrest 92L is the same as that of the footrest 90L of the first embodiment. Hereinafter, the left footrest 92L and the left rotation axis XL1 will be described in detail. Meanwhile, a description of the right footrest and the right rotation axis will be omitted because the right footrest and the right rotation axis and left footrest 92L and the left rotation axis XL1 have a symmetric configuration.

The footrest 92L has a footrest surface S0. The footrest surface S0 is a flat surface apart from groove holes, e.g. it is flat when the grooves and holes are filled. Hereinafter, the term "footrest surface S0" refers to this flat surface. The footrest 92L is supported by a vehicle body frame 61 via a hinge member 93L. The footrest 92L is supported by the hinge member 93L so as to be turnable around the rotation axis XL1 and is configured to turn around the rotation axis XL and thus to move between the use position and the retracted position.

The orientation of the footrest 92L when in the use position is closer to a horizontal orientation than a vertical orientation. The orientation of the footrest 92L when in the retracted position is closer to the vertical orientation than the horizontal orientation.

In this description, a line perpendicular to the footrest surface S0 of the footrest 92L is defined as "the perpendicular line P1" while a line in the footrest surface S0 extending in the left and right direction of the vehicle body when the footrest 92L is in the use position is defined as "the transverse line P2."

When the footrest 92L is in the use position, the perpendicular line P1 of the footrest surface S0 extends in the up and down direction of the vehicle body as illustrated in Figures 13A and 13B. Meanwhile, the transverse line P2 extends in the left and right direction of the vehicle body as illustrated in Figures 13A and 13C.

The rotation axis XL1 of the footrest 92L is not parallel to the footrest surface S0 when in the use position and is inclined, or obliquely oriented with respect to the perpendicular line P1 of the footrest surface S0 when in the use position.

More specifically, as illustrated in Figure 13B, the rotation axis XL1 has a slope closer to a virtual line VL1 than to the perpendicular line P1 of the footrest surface S0 when viewed in the left and right direction of the vehicle body. The virtual line VL1 is a line obtained by causing the perpendicular line P1 to incline 45 degrees in the same rotation direction as that of the rotation axis XL1 when viewed in the left and right direction of the vehicle body. In addition, the rotation axis XL1 has a slope closer to the virtual line VL1 than to a virtual line VL2 when viewed in the left and right direction of the vehicle body. The virtual line VL2 is a line that is parallel to the footrest surface S0 when in the use position and extends in the front and rear direction of the vehicle body.

As illustrated in Figure 13A, the rotation axis XL1 has a slope closer to the perpendicular line P1 than to a virtual line VL3 when viewed in the front and rear direction of the vehicle body. The virtual line VL3 is a line obtained by causing the perpendicular line P1 to incline 30 degrees in the same turning direction as that of the rotation axis XL1 when viewed in the front and rear direction of the vehicle body.

Turning the footrest 92L around the rotation axis XL configured in the manner may move the footrest 90L to the retracted position as illustrated in Figures 14A, 14B, and 14C. In the retracted position, the perpendicular line P1 of the footrest surface S extends in a right forward oblique direction as illustrated in Figure 14C. The left footrest 92L is retracted in such a way that the footrest surface S is directed to or faces the center of the vehicle body. In addition, when the footrest 92L is in the retracted position, the transverse line P2 is inclined with respect to the vertical direction, but extends in the up and down direction of the vehicle body as illustrated in Figure 14A and 14B.

Placing left the footrest 92L of the second embodiment at a portion of the left rear cover that has a slope displaced rightward as the left rear cover extends rearward in a plan view of the vehicle body allows the footrest 92L to be placed so that the rear surface of the footrest 92L extends from the rear cover around the footrest 92L when the footrest 92L is retracted.

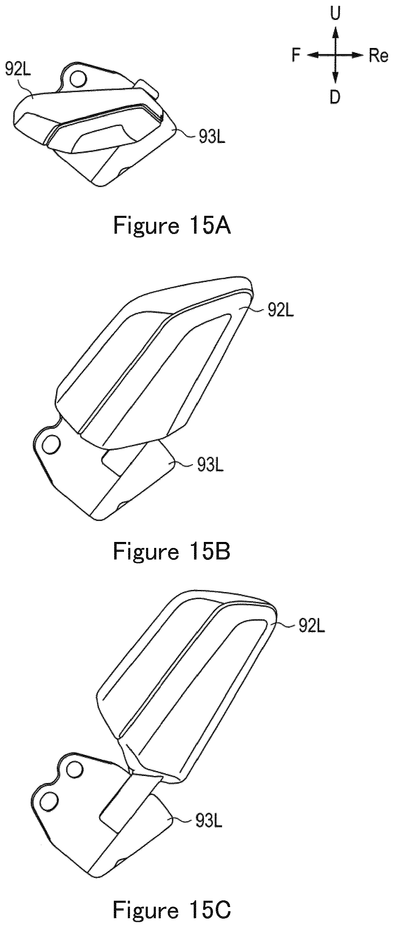

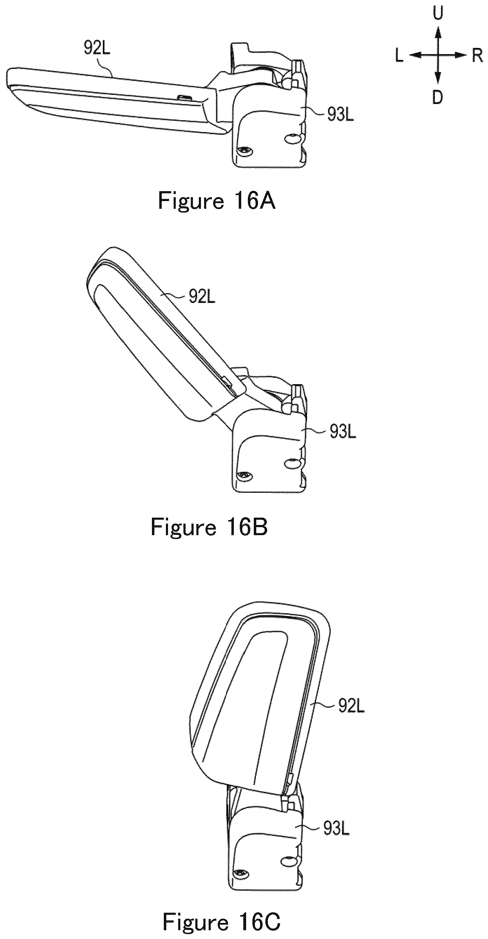

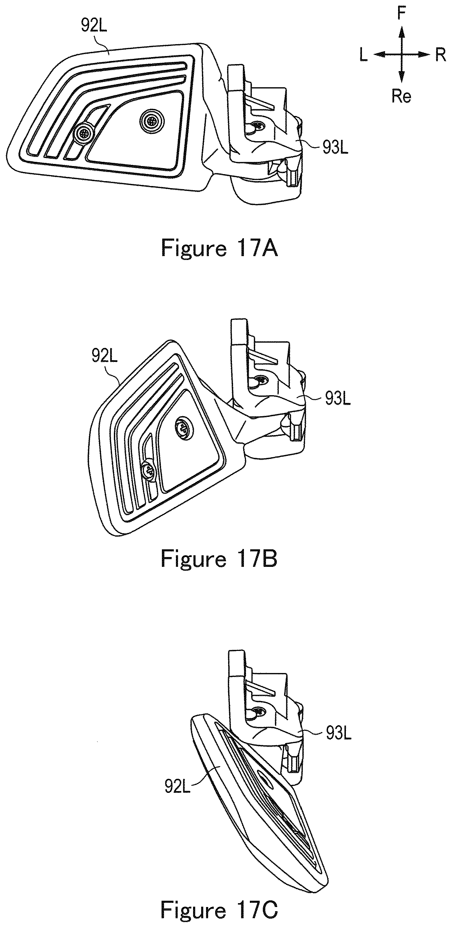

Figure 15 is a diagram for describing an operation of the left footrest and includes Figures 15A, 15B, and 15C illustrating side views for the use position, an intermediate position, and the retracted position, respectively. Figure 16 is a diagram for describing an operation of the left footrest and includes Figures 16A, 16B, and 16C illustrating rear views for the use position, the intermediate position, and the retracted position, respectively. Figure 17 is a diagram for describing an operation of the left footrest and includes Figures 17A, 17B, and 17C illustrating top views for the use position, the intermediate position, and the retracted position, respectively. The intermediate position refers to a middle position between the use position and retracted position where the footrest 92L is moved.

As illustrated in Figures 15 to 17, the left footrest 92L moves from the use position to the retracted position through the intermediate position. Since the rotation axis XL is neither parallel to nor perpendicular to the footrest surface S0, the footrest surface S0 of the left footrest 92L moves between the use position and retracted position while a slope angle of the footrest surface S0 of the left footrest 92L changes during the movement.

As described above, according to the vehicle of the second embodiment, setting the rotation axis XL in this manner makes it easy to avoid interference between a vehicle constituting element and the footrest 92L even when such a vehicle constituting element exists in a vertically-upward direction of the footrest surface S0 of the footrest 92L, as compared with a case where the footrest 92L is turned around a rotation axis parallel to the footrest surface S0. Moreover, the footrest 92L is retracted into a position where the footrest surface S0 is close to the vertical orientation in this embodiment, so that interference between a component disposed at an inner side of the vehicle body and the footrest 92L may be suppressed as compared with the case where the footrest 92L is turned around a rotation axis perpendicular to the footrest surface S0. In addition, as compared with the case where the footrest 92L is turned in a vertically upward direction of the footrest surface S0 around a rotation axis parallel to the footrest surface S0, movement in which the footrest 92L shifts in the front and rear direction horizontal to the footrest surface S0 is added during the movement from the use position to the retracted position in this embodiment. For this reason, the operation range for the footrest 92L to move from the use position to the retracted position increases. In general, an increase in the operation range makes it hard to avoid interference between a vehicle component and the footrest 92L. However, there are not many vehicle components around the footrest 92L when in the use position because of layout characteristics. For this reason, in this embodiment, even when the operation range increases, the footrest 92L may be compactly retracted while avoiding interference with vehicle components. Thus, according to the present invention, even when the area of the footrest surface S0 is large, the footrest 92L may be compactly retracted without being turned in a vertically upward direction of the footrest surface S0.

### (Definition 1 of the Footrest Surface in Variation)

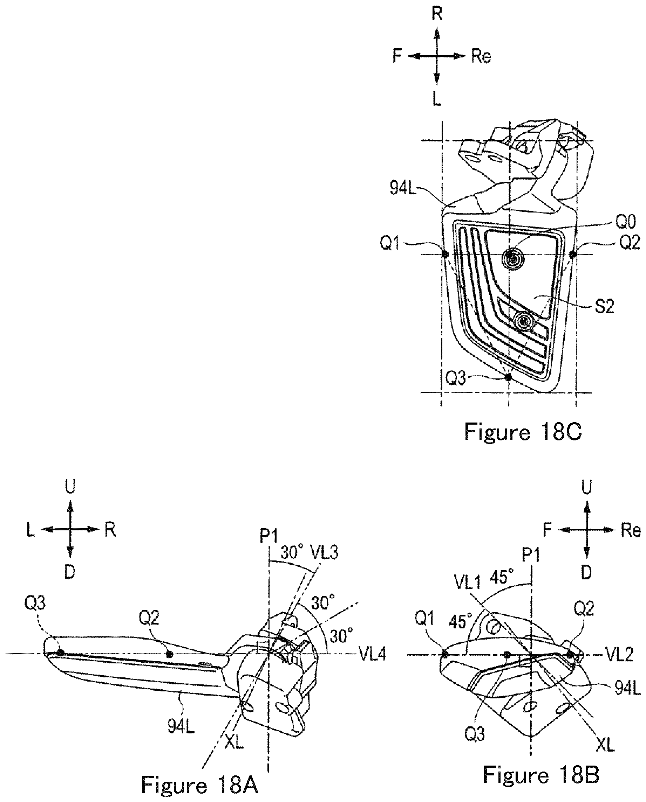

Figure 18 is a three-view diagram for describing definition 1 of a footrest surface of the footrest in a variation and includes Figures 18A, 18B, and 18C illustrating the footrest when viewed from the rearward, leftward, and upward directions of the vehicle body, respectively. In these drawings, although only the left footrest 94L is illustrated, the right footrest and the left footrest 94L have a symmetric configuration.

The footrest 94L in this variation has a configuration in which the top surface of the footrest 94L when in the use position is bent in a protruding shape. In this configuration, the footrest surface S2 may be defined as the following flat surface in this specification. More specifically, as illustrated in Figure 18C, a point on the top surface of the footrest 94L that overlaps a point at the center of the footrest 94L in the left and right direction of the vehicle body and at the center of the footrest 94L in the front and rear direction of the vehicle when the footrest 94L is in the use position is viewed from the upward direction of the vehicle body is defined as "center point Q0." Moreover, a "front end point Q1" and "rear end point Q2" of the footrest 94L are respectively set to points which overlap a virtual line that passes through the center point Q0 and that is parallel to the front and rear direction of the vehicle body in a plan view. Moreover, a left end point Q3 of the footrest 94L is set to a point that overlaps a virtual line that passes through the center point Q0 and that is parallel to the left and right direction of the vehicle body in a plan view. In addition, the footrest surface S2 is defined as a flat surface bounded by a line connecting the front end point Q1, the rear end point Q2, and the left end point Q3. Note that, since left the footrest 94L and the right footrest are symmetric, the footrest surface S2 of the right footrest is defined as a flat surface bounded by a line connecting the front end point, the rear end point, and the right end point while the front, rear, and right end points are set symmetrically with the corresponding points of the left footrest 94L.

As described above, the footrest surface S2 of a planar shape may be defined for the footrest 94L having a top surface bent in a protruding shape. In the case of the footrest surface S2 defined in this manner, when a passenger puts his or her foot on the footrest 94L, the position and angle of the foot are the same as the position and angle of the foot in the case where the passenger puts his or her foot on the footrest surface S2 of the planar shape.

The perpendicular line P1 that is perpendicular to the footrest surface S2 of the footrest 94L is defined. When the footrest 94L is in the use position, the perpendicular line P1 of the footrest surface S2 extends in the up and down direction of the vehicle body as illustrated in Figures 18A and 18B.

The rotation axis XL of the footrest 94L is not parallel to the footrest surface S2 when in the use position and is inclined with respect to the perpendicular line P1 of the footrest surface S2 when in the use position when viewed from the rearward direction of the vehicle body. Moreover, the rotation axis XL of the footrest 94L is inclined with respect to the perpendicular line P1 of the footrest surface S2 when in the use position when viewed from the leftward direction of the vehicle body.

More specifically, the left rotation axis XL is inclined so that a region of the axis XL that is positioned more forward is positioned more rightward when viewed from the upward direction of the vehicle body. In addition, the left rotation axis XL is inclined so that a region of the axis XL that is positioned more forward is positioned more upward when viewed from the leftward direction of the vehicle body. Moreover, the left rotation axis XL is inclined so that a region of the axis XL that is positioned more upward is positioned more rightward when viewed from the rearward direction of the vehicle body.

More specifically, as illustrated in Figure 18B, the rotation axis XL has a slope closer to a virtual line VL1 than to the perpendicular line P1 of the footrest surface S2 when viewed in the left and right direction of the vehicle body. The virtual line VL1 is a line obtained by causing the perpendicular line P1 to incline 45 degrees in the same rotation direction as that of the rotation axis XL when viewed in the left and right direction of the vehicle body. In addition, the rotation axis XL has a slope closer to a virtual line VL1 than to the virtual line VL2 when viewed in the left and right direction of the vehicle body. The virtual line VL2 is a line that is parallel to the footrest surface S2 when in the use position and that extends in the front and rear direction of the vehicle body.

Furthermore, as illustrated in Figure 18A, the rotation axis XL has a slope closer to a virtual line VL3 than to the perpendicular line P1 of the footrest surface S2 when viewed in the front and rear direction of the vehicle body. The virtual line VL3 is a line obtained by causing the perpendicular line P1 to incline 30 degrees in the same rotation direction as that of the rotation axis XL1 when viewed in the front and rear direction of the vehicle body. In addition, the rotation axis XL1 has a slope closer to the virtual line VL3 than to a virtual line VL4 when viewed in the front and rear direction of the vehicle body. The virtual line VL4 is a line that is parallel to the footrest surface S2 when in the use position and that extends in the left and right direction of the vehicle body.

### (Definition 2 of the Footrest Surface in Variation)

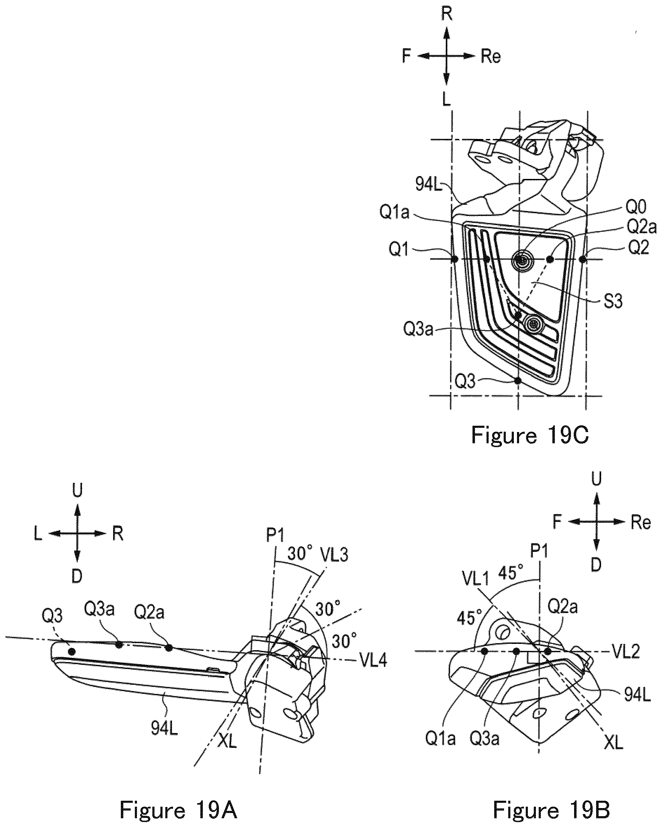

Figure 19 is a three-view diagram for describing definition 2 of a footrest surface of the footrest in a variation and includes Figures 19A, 19B, and 19C illustrating the footrest when viewed from the rearward, leftward, and upward directions of the vehicle body, respectively. In these drawings, although only the left footrest 94L is illustrated, however, the right footrest and the left footrest 94L have a symmetric configuration.

The footrest 94L in this variation likewise has a configuration in which the top surface of the footrest 94L when in the use position is bent in a protruding shape. In this configuration, the footrest surface S3 may be defined as the following flat surface in this specification. More specifically, as illustrated in Figure 19C, a point on the top surface of the footrest 94L that overlaps a point at the center of the footrest 94L in the left and right direction of the vehicle body and at the center of the footrest 94L in the front and rear direction of the vehicle when the footrest 94L in the use position is viewed from the upward direction of the vehicle body is defined as "center point Q0." Moreover, "front end point Q1" and "rear end point Q2" of the footrest 94L are respectively set to points which overlap a virtual line that passes through the center point Q0 and that extends in the front and rear direction of the vehicle body in a plan view. Moreover, "left end point Q3" of the footrest 94L is set to a point that overlaps a virtual line that passes through the center point Q0 and that extends in the left and right direction of the vehicle body in a plan view. In addition, in a plan view, a point on the top surface of the footrest 94L that overlaps the center point between the center point Q0 and the front end point Q1 is defined as "front midpoint Q1a," a point on the top surface of the footrest 94L that overlaps the center point between the center point Q0 and the rear end point Q2 is defined as "rear midpoint Q2a," and a point on the top surface of the footrest 94L that overlaps the center point between the center point Q0 and the left end point Q3 is defined as "left midpoint point Q3a." In this case, when there is a groove or hole on the top surface of the footrest 94L, the region of the footrest 94L where the groove or hole is filled is set to the top surface of the footrest 94L.

The footrest surface S3 is defined as a flat surface bounded by a line connecting front the midpoint Q1a, the rear midpoint Q2a, and the left midpoint Q3a. Note that, since the left footrest 94L and the right footrest are symmetric, the footrest surface S3 of the right footrest is defined as a flat surface bounded by a line connecting the front midpoint, the rear midpoint, and the right midpoint while the front, rear and right midpoints are set symmetrically with the corresponding points of the left footrest 94L.

As described above, the footrest surface S3 of a planar shape may be defined for the footrest 94L having a top surface bent in a protruding shape. In the case of the footrest surface S3 defined in this manner, even when a roundish area is formed on the peripheral portion of the footrest 94L, a flat surface obtained by excluding the influence of the roundish area on the peripheral portion may be the footrest surface S3. According to this definition, when the passenger puts his or her foot on the footrest 94L, the position and angle of the foot become the same as the position and angle of the foot in the case where the passenger puts his or her foot on the footrest surface S3 of the planar shape.

When the footrest 94L is in the use position, the perpendicular line P1 of the footrest surface S3 extends in the up and down direction of the vehicle body as illustrated in Figures 19A and 19B.

The rotation axis XL of the footrest 94L is not parallel to the footrest surface S3 in the use position and is inclined with respect to the perpendicular line P1 of the footrest surface S3, when in the use position when viewed from the rearward direction of the vehicle body. In addition, the rotation axis XL of the footrest 94L is inclined with respect to the perpendicular line P1 of the footrest surface S3 when in the use position when viewed from the leftward direction of the vehicle body.

As illustrated in Figure 19B, the rotation axis XL has a slope closer to a virtual line VL1 than to the perpendicular line P1 of the footrest surface S3 when viewed in the left and right direction of the vehicle body. The virtual line VL1 is a line obtained by causing the perpendicular line P1 to incline 45 degrees in the same rotation direction as that of the rotation axis XL when viewed in the left and right direction of the vehicle body. Moreover, the rotation axis XL has a slope closer to the virtual line VL1 than to a virtual line VL2 when viewed in the left and right direction of the vehicle body. The virtual line VL2 is a line that is parallel to the footrest surface S3 when in the use position and that extends in the front and rear direction of the vehicle body.

As illustrated in Figure 19A, the rotation axis XL has a slope closer to a virtual line VL3 than to the perpendicular line P1 of the footrest surface S3 when viewed in the front and rear direction of the vehicle body. The virtual line VL3 is a line obtained by causing the perpendicular line P1 to incline 30 degrees in the same rotation direction as that of rotation axis XL when viewed in the front and rear direction of the vehicle body. Moreover, the rotation axis XL has a slope closer to the virtual line VL3 than to a virtual line VL4 when viewed in the front and rear direction of the vehicle body. The virtual line VL4 is a line that is parallel to the footrest surface S3 when in the use position and that extends in the left and right direction of the vehicle body.

Each embodiment of the present invention has been described thus far.

In the embodiments, the description has been given with a footrest for a passenger, but the footrest may be a footrest for a rider.

Meanwhile, although a scooter type motorcycle has been illustrated as the vehicle in the embodiments, the vehicle could be any of various vehicles, particularly saddle-ride or straddle-type vehicles, such as a street type motorcycle, a vehicle having three wheels or more, a sport motorcycle, an all-terrain vehicle (ATV), mopeds, a snowmobile and the like.

In the embodiments, an example in which the footrest surface S0 in the use position is almost in a horizontal direction has been described. However, for a vehicle in which the user puts his or her feet on the footrests in front of the seat, the footrest surface S0 in the use position may be inclined so as to extend more upward as the footrest surface S0 extends forward of the vehicle body.

In addition, although the relationship between the rotation axis and the footrest surface, and the relationship between the footrest surface when in the use position and the footrest surface when in the retracted position are specifically illustrated in each of the embodiments, as long as the rotation axis intersects with a flat surface parallel to the footrest surface when in the use position and is inclined with respect to a line perpendicular to the footrest surface when in the use position, the present invention is not limited to the illustrated examples. In addition, as long as the footrest surface when in the use position is closer to a horizontal orientation than a vertical orientation while the footrest surface when in the retracted position is closer to the vertical orientation than the horizontal orientation when the vehicle stands upright, the present invention is not limited to the illustrated examples.

Each of the embodiments has been described with an assumption that the footrests 90L and 90R are each disposed at the position where the footrest in the use position overlaps the power unit in a side view. The term "position where the footrest overlaps the power unit" includes a position where the footrest overlaps the power unit when the power unit moves to a maximum extent with respect to the vehicle body frame in a side view.

While embodiments of the present invention may be embodied in many different forms, a number of illustrative embodiments are described herein with the understanding that the present disclosure is to be considered as providing examples of the principles of the invention and that such examples are not intended to limit the invention to the preferred embodiments described herein and/or illustrated herein.

While illustrative embodiments of the invention have been described herein, the present invention is not limited to the various preferred embodiments described herein, but includes any and all embodiments having equivalent elements, modifications, omissions, combinations (e.g. of aspects across various embodiments), adaptations and/or alterations as would be appreciated by those in the art based on the present disclosure. The limitations in the claims are to be interpreted broadly based on the language employed in the claims and not limited to examples described in the present specification or during the prosecution of the application, which examples are to be construed as non-exclusive. For example, in the present disclosure, the term "preferably" or "may" is non-exclusive and means "preferably, but not limited to" or "may be, but not limited to."

The present invention may be used for vehicles each including a footrest movable between a use position and a retracted position.

It will be appreciated that the term straddle-type vehicle or motor vehicle used herein and as used in the art, is intended to include the following terms also used in the art:
saddle-ride type vehicle or motor vehicle, saddle-straddling type vehicle or motor vehicle, and includes: motorcycles and motorbikes as well as motor tricycles and All Terrain Vehicles (ATV's), scooters, mopeds and snowmobiles.

### Reference Signs List

- 50: Front wheel
- 52: Steering handle
- 61: Vehicle body frame
- 70: Power unit
- 80: Main seat
- 82: Tandem seat
- 85: Rear cover
- 87: Rear wheel
- 90L, 92L, 94L: Left footrest
- 90R: Right footrest
- 91L, 93L: Left hinge member
- 91R: Right hinge member
- S0, S2, S3: Footrest surface
- XL, XL1: Left rotation axis
- XR: Right rotation axis
- P1: The perpendicular line
- P2: Transverse line
- Q0: Center point
- Q1: Front end point
- Q1a: Front midpoint
- Q2: Front end point
- Q2a: Rear midpoint
- Q3: Left end point
- Q3a: Left midpoint

## Claims

1. A vehicle (100) comprising:
a plurality of footrests, wherein
at least one footrest of the plurality of footrests (90L,92L,94L,90R) is configured to turn around a rotation axis (XL,XL1,XR) and thereby move between a use position and a retracted position, the footrest (90L,92L,94L,90R) being a footrest in which a maximum dimension of the footrest (90L,92L,94L,90R) in a front and rear direction of a vehicle body and a maximum dimension of the footrest (90L,92L,94L,90R) in a left and right direction of the vehicle body are greater than a maximum dimension of the footrest (90L,92L,94L,90R) in a direction perpendicular to a footrest surface of the footrest (90L,92L,94L,90R) when the footrest (90L,92L,94L,90R) is in the use position, and
the plurality of the footrests includes a left footrest (90L,92L,94L) and a right footrest (90R), the left footrest (90L,92L,94L) being disposed in a leftward direction from a center of the vehicle body; and the right footrest (90R) being disposed in a rightward direction from the center of the vehicle body, wherein the rotation axis (XL,XL1) of the left footrest (90L,92L,94L) is inclined so that a region of the rotation axis (XL,XL1) that is positioned more upward is positioned more rightward when viewed in the front and rear direction of the vehicle body, and the rotation axis (XR) of the right footrest (90R) is inclined so that a region of the rotation axis (XR) that is positioned more upward is positioned more leftward when viewed in the front and rear direction of the vehicle body,
wherein the rotation axis (XL,XL1,XR) intersects with a flat surface that is parallel to the footrest surface when in the use position and is inclined with respect to a line perpendicular to the footrest surface when in the use position, and
the footrest surface (S0,S2,S3) when in the use position is closer to a horizontal orientation than a vertical orientation while the footrest surface (S0,S2,S3) when in the retracted position is closer to the vertical orientation than the horizontal orientation when the vehicle (100) stands upright.

2. The vehicle (100) according to claim 1, wherein the rotation axis (XL,XL1,XR) is inclined so that a region of the rotation axis (XL,XL1,XR) that is positioned more upward is positioned more forward when viewed in the left and right direction of the vehicle body.

3. The vehicle (100) according to claim 1, wherein the rotation axis (XL,XL1,XR) is inclined so that a region of the rotation axis (XL,XL1,XR) that is positioned more upward is positioned more rearward when viewed in the left and right direction of the vehicle body.

4. The vehicle (100) according to claim 1, wherein the rotation axis (XL,XL1,XR) has a slope that is closer to a line obtained by causing a line perpendicular to the footrest surface (S0,S2,S3) in the use position to incline 45 degrees in a rotation direction identical to that of the rotation axis (XL,XL1,XR) than to the line perpendicular to the footrest surface (S0,S2,S3) when in the use position and that is closer to the line caused to incline 45 degrees than to a line parallel to the footrest surface (S0,S2,S3) when in the use position when viewed in the left and right direction of the vehicle body (61).

5. The vehicle (100) according to claim 1, wherein the rotation axis (XL,XL1,XR) has a slope that is closer to a line obtained by causing a line perpendicular to the footrest surface in the use position to incline 30 degrees in a rotation direction identical to that of the rotation axis (XL,XL1,XR) than to a line perpendicular to the footrest surface (S0,S2,S3) when in the use position and that is closer to the line caused to incline 30 degrees than to a line parallel to the footrest surface (S0,S2,S3) when in the use position when viewed in the front and rear direction of the vehicle body.

6. The vehicle (100) according to claim 1, further comprising:
a vehicle body frame (61); and
a power unit (70) swingably supported by the vehicle body frame (61), wherein
the footrest (90L,92L,94L) in the use position is disposed at a position where the footrest (90L,92L,94L) overlaps the power unit in a side view of the vehicle body (61).

## Patentansprüche

1. Fahrzeug (100), umfassend:
eine Mehrzahl von Fußstützen, wobei
zumindest eine Fußstütze der Mehrzahl von Fußstützen (90L, 92L, 94L, 90R) konfiguriert ist, um sich um eine Drehachse (XL, XL1, XR) zu drehen und sich somit zwischen einer Arbeitsposition und einer eingefahrenen Position zu bewegen, wobei die Fußstütze (90L, 92L, 94L, 90R) eine Fußstütze ist, in welcher die maximale Abmessung der Fußstütze (90L, 92L, 94L, 90R) in einer Vorwärtsrichtung und in einer Rückwärtsrichtung einer Fahrzeugkarosserie und die maximale Abmessung der Fußstütze (90L, 92L, 94L, 90R) in der linken und rechten Richtung der Fahrzeugkarosserie größer sind als eine maximale Abmessung der Fußstütze (90L, 92L, 94L, 90R) in einer zu einer Fußstützfläche der Fußstütze (90L, 92L, 94L, 90R) senkrechten Richtung, wenn die Fußstütze (90L, 92L, 94L, 90R) sich in der Arbeitsposition befindet, und
die Mehrzahl von Fußstützen eine linke Fußstütze (90L, 92L, 94L) und eine rechte Fußstütze (90R) umfasst, wobei die linke Fußstütze (90L, 92L, 94L) in einer vom Mittelpunkt der Fahrzeugkarosserie nach links gerichteten Richtung angeordnet ist; und die rechte Fußstütze (90R) in einer vom Mittelpunkt der Fahrzeugkarosserie nach rechts gerichteten Richtung angeordnet ist, wobei die Drehachse (XL, XL1) der linke Fußstütze (90L, 92L, 94L) geneigt ist, sodass ein Bereich der Drehachse (XL, XL1), welcher mehr nach oben gelegen ist, mehr nach rechts positioniert wird wenn man in der Vorwärtsrichtung und in der Rückwärtsrichtung der Fahrzeugkarosserie betrachtet, und die Drehachse (XR) der rechte Fußstütze (90R) geneigt ist, sodass ein Bereich der Drehachse (XR), welcher mehr nach oben gelegen ist, mehr nach links positioniert wird, wenn man in der Vorwärtsrichtung und in der Rückwärtsrichtung der Fahrzeugkarosserie betrachtet,
wobei die Drehachse (XL, XL1, XR) eine flache Oberfläche schneidet, welche sich parallel zur Fußstützenfläche erstreckt, wenn in der Arbeitsposition, und relativ zu einer zur Fußstützenfläche senkrechten Linie, wenn in der Arbeitsposition, geneigt ist, und
die Fußstützenfläche (S0, S2, S3), wenn in der Arbeitsposition, näher an einer horizontalen Ausrichtung ist als an einer vertikalen Ausrichtung, während die Fußstützenfläche (S0, S2, S3), wenn in der eingefahrenen Position, an die vertikale Ausrichtung näher liegt als an die horizontale Ausrichtung, wenn das Fahrzeug (100) aufrecht steht.

2. Fahrzeug (100) nach Anspruch 1, wobei die Drehachse (XL, XL1, XR) geneigt ist, sodass ein Bereich der Drehachse (XL, XL1, XR), welcher mehr nach oben gelegen ist, mehr nach vorne positioniert ist, wenn er in der linken und rechten Richtung der Fahrzeugkarosserie beobachtet wird.

3. Fahrzeug (100) nach Anspruch 1, wobei die Drehachse (XL, XL1, XR) so geneigt ist, dass ein Bereich der Drehachse (XL, XL1, XR), welcher mehr nach oben gelegen ist, mehr nach hinten positioniert ist, wenn er in der linken und rechten Richtung der Fahrzeugkarosserie beobachtet wird.

4. Fahrzeug (100) nach Anspruch 1, wobei die Drehachse (XL, XL1 XR) eine Neigung aufweist, welche einer Linie näher gelegen ist, welche durch Neigung einer zur Fußstützenfläche (S0, S2, S3) senkrechten Linie in der Arbeitsposition um 45 Grad in einer Drehrichtung erhalten wird, welche der Drehrichtung der Drehachse (XL, XL1, XR) identisch ist, als einer Linie, welche senkrecht zur Fußstützenfläche (S0, S2, S3) steht, wenn in der Arbeitsposition, und welche der um 45 Grad geneigten Linie näher liegt als einer Linie, die parallel zur Fußstützenfläche (S0, S2, S3) verläuft, wenn in der Arbeitsposition, und wenn in der linken und rechten Richtung der Fahrzeugkarosserie (61) gesehen.

5. Fahrzeug (100) nach Anspruch 1, wobei die Drehachse (XL, XL1, XR) eine Neigung aufweist, welche einer Linie näher liegt, welche durch Neigung einer zur Fußstützenfläche (S0, S2, S3) senkrechten Linie in der Arbeitsposition um 30 Grad in einer Drehrichtung erhalten wird, welche der Drehrichtung der Drehachse (XL, XL1, XR) identisch ist, als einer Linie, welche senkrecht zu der Fußstützenfläche (S0, S2, S3) steht, wenn in der Arbeitsposition, und welche der um 30 Grad geneigten Linie näher liegt als eine Linie, die parallel zur Fußstützenfläche (S0, S2, S3) verläuft, wenn in der Arbeitsposition, und wenn in der Vorwärts- und Rückwärtsrichtung der Fahrzeugkarosserie gesehen.

6. Fahrzeug (100) nach Anspruch 1, ferner umfassend:
einen Fahrzeugkarosserierahmen (61); und
eine Antriebseinheit (70), welche vom Fahrzeugkarosserierahmen schwenkbar getragen ist, wobei die Fußstütze (90L, 92L, 94L) in der Arbeitsposition in einer Position angeordnet ist, wo die Fußstütze (90L, 92L, 94L) die Antriebseinheit in einer Seitenansicht der Fahrzeugkarosserie (61) überlappt.

## Revendications

1. Véhicule (100) comprenant:
une pluralité de repose-pieds, dans lequel
au moins un repose-pied de la pluralité de repose-pieds (90L, 92L, 94L, 90R) est configuré pour tourner sur un axe de rotation (XL, XL1, XR) et pour ainsi pouvoir permuter entre une position d'utilisation et une position repliée, le repose-pied (90L, 92L, 94L, 90R) étant un repose-pied dans lequel une dimension maximale du repose-pied (90L, 92L, 94L, 90R) dans le sens avant-arrière de la carrosserie du véhicule et une dimension maximale du repose-pied (90L, 92L, 94L, 90R) dans le sens gauche-droite de la carrosserie du véhicule sont supérieures à une dimension maximale du repose-pied (90L, 92L, 94L, 90R) dans le sens perpendiculaire à une surface du repose-pied (90L, 92L, 94L, 90R), lorsque le repose-pied (90L, 92L, 94L, 90R) se trouve dans la position d'utilisation, et
la pluralité de repose-pieds comporte un repose-pied gauche (90L, 92L, 94L) et un repose-pied droit (90R), le repose-pied gauche (90L, 92L, 94L) étant disposé en étant dirigé vers la gauche en s'écartant du centre de la carrosserie du véhicule, et le repose-pied droit (90R) étant disposé en étant dirigé vers la droite en s'écartant du centre de la carrosserie du véhicule ; l'axe de rotation (XL, XL1) du repose-pied gauche (90L, 92L, 94L) étant incliné de manière qu'une zone de l'axe de rotation (XL, XL1) située davantage vers le haut soit située davantage vers la droite, vu dans le sens avant-arrière de la carrosserie du véhicule, et l'axe de rotation (XR) du repose-pied droit (90R) étant incliné de manière qu'une zone de l'axe de rotation (XR) située davantage vers le haut soit située davantage vers la gauche, vu dans le sens avant-arrière de la carrosserie du véhicule,
dans lequel l'axe de rotation (XL, XL1, XR) coupe une surface plane qui est parallèle à la surface du repose-pied lorsqu'il se trouve dans la position d'utilisation et est inclinée par rapport à une ligne perpendiculaire à la surface du repose-pied lorsqu'il se trouve dans la position d'utilisation, et
la surface du repose-pied (S0, S2, S3), dans la position d'utilisation, est plus proche d'une orientation horizontale que d'une orientation verticale tandis que la surface du repose-pied (S0, S2, S3), dans la position repliée, est plus proche de l'orientation verticale que de l'orientation horizontale lorsque le véhicule (100) est en position debout.

2. Véhicule (100) selon la revendication 1, dans lequel l'axe de rotation (XL, XL1, XR) est incliné de manière qu'une zone de l'axe de rotation (XL, XL1, XR) située davantage vers le haut soit située davantage vers l'avant, vu dans le sens gauche-droite de la carrosserie du véhicule.

3. Véhicule (100) selon la revendication 1, dans lequel l'axe de rotation (XL, XL1, XR) est incliné de manière qu'une zone de l'axe de rotation (XL, XL1, XR) située davantage vers le haut soit située davantage vers l'arrière, vu dans le sens gauche-droite de la carrosserie du véhicule.

4. Véhicule (100) selon la revendication 1, dans lequel l'axe de rotation (XL, XL1, XR) présente une inclinaison qui est plus proche d'une ligne obtenue en amenant une ligne perpendiculaire à la surface du repose-pied (S0, S2, S3), dans la position d'utilisation, à s'incliner de 45 degrés dans un sens de rotation identique à celui de l'axe de rotation (XL, XL1, XR) que d'une ligne perpendiculaire à la surface du repose-pied (S0, S2, S3), dans la position d'utilisation, et qui est plus proche d'une ligne amenée à s'incliner de 45 degrés que d'une ligne parallèle à la surface du repose-pied (S0, S2, S3), dans la position d'utilisation, vu dans le sens gauche-droite de la carrosserie du véhicule (61).

5. Véhicule (100) selon la revendication 1, dans lequel l'axe de rotation (XL, XL1, XR) présente une inclinaison qui est plus proche d'une ligne obtenue en amenant une ligne perpendiculaire à la surface du repose-pied, dans la position d'utilisation, à s'incliner de 30 degrés dans un sens de rotation identique à celui de l'axe de rotation (XL, XL1, XR) que d'une ligne perpendiculaire à la surface du repose-pied (S0, S2, S3), dans la position d'utilisation, et qui est plus proche d'une ligne amenée à s'incliner de 30 degrés que d'une ligne parallèle à la surface du repose-pied (S0, S2, S3), dans la position d'utilisation, vu dans le sens avant-arrière de la carrosserie du véhicule.

6. Véhicule (100) selon la revendication 1, comprenant en outre :
une ossature de carrosserie (61) du véhicule ; et
une unité motrice (70) en support oscillant sur l'ossature de carrosserie (61) du véhicule, dans lequel le repose-pied (90L, 92L, 94L), lorsqu'il se trouve dans la position d'utilisation, est disposé en une position où le repose-pied (90L, 92L, 94L) vient recouvrir l'unité motrice, selon une vue de côté de la carrosserie du véhicule (61).
